(19)

Europäisches
Patentamt
European
Patent Office
Office européen
des brevets

(11) **EP 2 028 450 A2**

(12) **EUROPEAN PATENT APPLICATION**

(43) Date of publication:
**25.02.2009 Bulletin 2009/09**

(51) Int Cl.:
*G01D 5/14* (2006.01)     *G01D 5/244* (2006.01)

(21) Application number: **08013313.5**

(22) Date of filing: **24.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.07.2007 GB 0714663**
              **23.08.2007 GB 0716477**

(71) Applicant: **Melexis NV**
   **8900 Ieper (BE)**

(72) Inventors:
• **Schott, Christian**
  **1167 Lussy-sur-Morges (CH)**
• **Buchaillard, Alain**
  **2019 Rochefort (CH)**

(74) Representative: **Wilson Gunn**
**Charles House**
**148/9 Great Charles Street**
**Birmingham B3 3HT (GB)**

(54) **Position sensor**

(57)     A method of determining the position of a probe relative to a scale wherein the probe contains a sensor of the type comprising one or more pairs of orthogonal sensing elements X, Y operable to measure properties varying locally with the position of the probe relative to the scale. In use, a sinusoidally varying bias Ix, Iy is applied to each of the elements X, Y. The resultant outputs of elements X and Y are fed to summing means 101 and difference means 102. The summing means 101 is operable to output a summed signal Vsum equal to the instantaneous sum of Vx and Vy. The difference means 102 is operable to output a difference signal Vdiff equal to the instantaneous difference between Vx and Vy. The outputs Vsum and Vdiff are fed into a phase comparator 103, which is operable to determine the phase difference between them. The phase angle between Vsum and Vdiff provides an indication of the position of the probe relative to the scale. In alternative embodiments the phase angle between either Vsum or Vdiff and the bias signal may be used to Vdiff provides an indication of the position of the probe relative to the scale. In various embodiments, the above method is applied to both linear and rotary systems using magnetic or optical sensing elements.

Figure 1

**Description**

The present invention relates to position sensors operable to determine the position of a probe relative to a scale and in particular to a method of operating such sensors.

Position sensors are utilised in a number of applications including as angular position sensors for rotors such as switch elements, shafts or similar or as linear position sensor for tooling machines, elevators etc. In rotary applications, a sensing probe is usually fixed in position adjacent to a rotating scale although the alternative arrangement is potentially possible. In linear applications, a sensing probe is provided adjacent to a linear scale, and either the probe is movable relative to a fixed scale or the scale is movable relative to a fixed probe.

In a typical such position sensor, one or more sensing elements will be provided in the probe. The sensing elements are operable to sense properties of the scale that vary with relative position either angular or linear as appropriate. Typically, the probe will comprise a pair of sensing elements that are offset in position and/or orientation allowing a determination of position by comparing the different sensing element outputs.

In one example, scale may comprise a magnetised rotor and the sensing elements may comprise magnetic field sensing elements. By determining the outputs of each magnetic field sensing element an indication of the local magnetic field orientation can be obtained and thus an indication of the orientation of the rotor can be obtained. In other embodiments where the scale may comprise a toothed paramagnetic or ferromagnetic wheel and the probe may comprise one or more magnetic sensing elements back biased with a magnet. In such cases, the passage of a tooth may be determined by a variation in magnetic field magnitude and the orientation of the wheel by maintaining a count of tooth passing events.

Whilst each of these methods are effective for determining probe position, they are each vulnerable to errors due to DC offsets in the sensing elements and they may require a division operation between the output values of at least two sensor elements.

It is an object of the present invention to provide a new method for determining the position of a probe relative to a scale.

According to a first aspect of the present invention there is provided a method of determining the position of a probe relative to a scale wherein the probe contains a sensor of the type comprising one or more pairs of orthogonal sensing elements operable to measure properties varying locally with the position of the probe relative to the scale, the method comprising the steps of: applying a periodically varying bias to each sensing element; determining the sum of and/or the difference between the outputs of pairs of sensing elements to provide a sum output signal and/or a difference output signal for each pair of sensing elements; and determining one of: the phase difference between the sum and difference output signals; the phase difference between the sum output signal and the applied bias; or the phase difference between the difference output signal and the applied bias for each pair of sensing elements to thereby determine the position of the probe relative to the scale.

In this manner, the position of a probe relative to a scale may be determined in a way that is not affected by a systematic bias in the output level of each sensing element.

The probe may be fixed and the scale moveable or the scale may be fixed and the probe movable. Relative movement may be rotational or linear. In rotational embodiments the scale may be or may be incorporated into a rotor such as a shaft, a switch element, a disc, a rotary encoder or similar. In linear embodiments the scale may be or may be incorporated into a track, a rod or similar.

The scale may provide a single scale period of property variation or may provide multiple repeating scale periods of property variations. In the case wherein the scale has a single scale period the method may involve directly determining the absolute position of the probe relative to the scale. In the case wherein the scale has multiple scale periods, the method may involve determining the position of the probe relative to a particular scale period. In such cases, the absolute position of the probe may be determined by maintaining a count of successive scale periods.

In the context of the present invention a pair of orthogonal sensing elements should be understood to comprise a pair of sensing elements orientated or positioned such that the pair of sensing elements obtains output signals that are substantially 90° out of phase as a result of the position of the probe relative to the scale. The method may be applied to a sensor comprising a single pair of orthogonal sensing elements. In an alternative embodiment, the method may be applied to a sensor comprising multiple pairs of orthogonal sensing elements. If multiple pairs of orthogonal sensing elements are provided each pair may be orientated or positioned orthogonally or may be orientated or positioned at another or at a desired offset.

The output signal from each sensing element may be amplified using suitable amplification means, if required or desired. Additionally or alternatively, the sum and/or difference signals may be amplified by suitable amplification means, if required or desired. Suitable amplification means may be a differential amplifier. Additionally or alternatively, the amplified signal may be filtered using a band pass filter after amplification.

Preferably, the periodic bias applied to the sensing elements in the or each pair is 90° out of phase. The periodic bias may be any form of periodic signal including a square or rectangular waveform. Most preferably, the sinusoidal bias applied to each sensing element is a temporal sinusoidal bias having a common timebase ω. For example, the bias applied to one sensing element may be have the form sin(ωt) whilst the bias applied to the other sensing element may have the form cos(ωt). If the phase difference between the sum and difference signals is determined, the output phase difference shifts by two periods in phase over a full period of scale variation. The position of the probe within a given period of scale variation thus may be calculated by halving the phase difference angle between the sum output and the difference output. If only one of the sum or difference signals is used, the position of the probe within a given period of scale variation may be calculated directly from the phase difference angle between the sum or difference signal and either applied bias signal. In some embodiments, both methods may be applied: the phase difference angle between the sum or difference signal and either applied bias signal used to determine the probe position and the phase difference angle between the sum output and the difference output being used to improve the resolution of the determined probe position.

In any such embodiment, the phase difference may be determined by use of a phase comparator. The output of the phase comparator may be a pulse width modulated signal wherein the duty period varies in proportion to the determined phase difference. Preferably, the duty cycle varies between zero and full width over a full scale period. Such a signal may be converted to an analogue output by low pass filtering. Alternatively, such a signal may be converted to a digital signal by starting a counter upon each rising pulse and stopping said counter on each falling pulse. Preferably, the counter is clocked by a signal having the same timebase as the applied bias. The output value is thus independent of any timebase drift.

The properties sensed by the sensing element may be a local magnetic field or local radiation intensity, in particular local visual radiation intensity.

In the event that the monitored property is a magnetic field, the sensing elements are magnetic field sensing elements and either: the scale is magnetised or has a magnet attached thereto; or the probe is magnetised or has a magnet attached thereto. The magnetic field sensing elements may be Hall elements. Alternatively, the magnetic field sensing elements may be magnetoresistive elements such as anisotropic magneto resistors (AMR), giant magneto resistors (GMR) or tunnelling magneto resistors (GMR). In such magnetic sensing embodiments, the applied periodic bias may be a sinusoidal bias current.

The magnetic field variation provided by the scale may comprise variation in magnetic field orientation or variation in magnetic field magnitude. The variation may comprise a single period of variation or may comprise multiple periods of variation.

In embodiments having multiple periods of magnetic field orientation variation, the scale may comprise alternating bands of magnetic material of opposite polarity. A pair of such band may thus define a scale period. The probe may comprise either a pair of orthogonally orientated magnetic sensing elements or a pair of magnetic sensing elements having a parallel orientation and a lateral separation equal to half the width of each band. In such cases the determined phase difference may be directly related to the position of the probe within a particular scale period.

In embodiments having multiple periods of magnetic field magnitude variation, the scale may comprise a plurality of regularly spaced projecting teeth. The probe may comprise either a pair of magnetic sensing elements having a parallel orientation and a lateral separation equal to half the width of each tooth. A tooth and an adjacent gap may thus define a scale period. The probe may be provided with one or more back biasing magnets. In such cases the determined phase difference may be directly related to the position of the probe within a particular scale period.

In such embodiments, the scale may be linear or curved. If curved, the scale may comprise an arc, a ring, a wheel, a helical or spiral form.

In embodiments having a single period of magnetic variation, the scale may comprise a magnetic rotor having a magnetic axis substantially perpendicular to its axis of rotation. A full rotation may thus define the single scale period. The probe may comprise a pair of orthogonally orientated magnetic sensing elements. The axis of rotation may be substantially orthogonal to the orientations of both of the magnetic sensing elements. In such cases the determined phase difference may be directly related to the orientation of the rotor relative to the probe.

In the event that the monitored property is radiation intensity, probe comprises a pair of radiation sensing elements and the scale comprises a pair of encoder tracks, each track having sinusoidally varying reflection or transmission properties which are mutually 90° out of phase. Each radiation sensing element may be operable to detect only light reflected or transmitted by one of the tracks. One or more light sources are additionally provided for illuminating the encoder tracks. In such cases: if the reflection property of the tracks varies sinusoidally, the light source is provided on the same side of the encoder tracks as the sensing elements; and if the transmission property of the tracks varies sinusoidally, the light source is provided on the opposite side of the encoder tracks as the sensing elements. In such embodiments, the applied periodic bias may be a sinusoidal variation in the intensity of the light sources or a sinusoidal bias applied to the output of the sensing elements.

The encoder tracks may comprise a single period of sinusoidal variation along their length. In such embodiments, the phase difference may be directly indicative of position. Alternatively, the encoder tracks may each comprise multiple periods of sinusoidal variation along their lengths. In such embodiments, the phase difference may be indicative of position within a particular scale period.

The encoder tracks may be linear or curved. If curved, the tracks may trace an arc, a ring, a helical or spiral form. The tracks may be provided on a planar, linear, arcuate, annular, circular, helical or spiral substrate as required.

According to a second aspect of the present invention there is provided a position sensor for sensing the position of a probe relative to a scale comprising: one or more pairs of sensing elements; bias generating means operable to apply a periodic bias to each sensing element; one or both of summing means for calculating a sum output signal for each pair of sensing elements the sum output signal being the sum of the outputs of the pair of sensing elements and difference means for calculating a difference output signal for each pair of sensing elements the difference output signal being the difference between the outputs of the pair of sensing elements; and phase comparator means for determining one of: the phase difference between the sum and difference output signals; the phase difference between the sum output signal and the applied bias; or the phase difference between the difference output signal and the applied bias for each pair of sensing elements to thereby determine the position of the probe relative to the scale.

The apparatus of the second aspect of the present invention may incorporate any or all features of the method of the first aspect of the present invention as desired or as appropriate.

The sensing elements may be operable to sense a local magnetic field. In such embodiments, the sensing elements may be magnetic field sensing elements such as Hall elements. Alternatively, the sensing elements may be radiation sensing elements.

The sensor may comprise an amplifier for amplifying the output signal. The sensor may comprise a demodulator for demodulating the output signal before amplification. The sensor may comprise a band pass filter for filtering the output signal after amplification.

According to a third aspect of the present invention there is provided a method of removing inherent offset from an output signal of a Hall element of the type having a pair of biasing contacts (designated supply negative SN and supply positive SP) and a pair of output contacts (designated output negative ON and output positive OP), the method comprising the steps of: commutating connection to the contacts such that each of the contacts is operable as each of the pair of bias contacts SN, SP and operable as each of the output contacts ON, OP in a regular cycle; and applying a suitable filter to the obtained output such that the element due to the inherent offset signal is substantially removed but the element due to the true Hall output signal is substantially retained.

By commutating the contacts in this manner, different properties are induced into the element of the obtained output due to the Hall signal as compared with the that due to the inherent offset.

Preferably, the designated bias contacts are driven by a periodically varying bias current which may be a sinusoidally varying bias current.

The obtained output signal may be amplified by use of a suitable amplification means, such as a differential amplifier. The applied filter may be operable to remove offset introduced by the amplification means in addition to offset inherent to the Hall element.

In one configuration, the commutation might be arranged such that each contact is operable as each of as each of the pair of bias contacts SN, SP and as each of the output contacts ON, OP in turn in a four step cycle. In one example, the contacts may change function in a unidirectional rotating cycle around the Hall element. In such a cycle, each contact may be operable in sequence as SN, OP, SP, ON in turn. In such a sequence each contact would be one step out of phase with the adjacent contacts. In such a cycle, the inherent Hall offset varies in sign from phase to phase.

In an alternative example, the bias contacts and the output contacts may change function according to contra-rotational cycles. In such a contra-rotational cycle one opposing pair of contacts may each be operable in sequence as SN, ON, SP, OP in turn and the other opposing pair of contacts may be operable in sequence as ON, SN, OP, SP. In such a sequence each pair of opposed contacts would be two steps out of phase with each other. In such a cycle, the inherent Hall offset maintains a constant sign between phases.

The commutation cycle may be controlled by a switching means in response to a chopping signal. In such an embodiment, the filter may comprise a band pass filter. The upper cutoff frequency of said band pass filter is preferably less than the frequency of the chopping signal. This enables noise from the chopping signal to be substantially eliminated and also, if a unidirectional commutation cycle is used, the inherent Hall offset to be substantially eliminated. Preferably, the lower cutoff frequency is greater than the frequency of the sinusoidal bias current. This enables the substantial elimination of DC offsets inherent in the signal such as an inherent amplification offset and also, if a contra-rotational commutation cycle is used, the substantial elimination of the inherent Hall offset.

Alternatively, the commutation cycle may be controlled by a modulator in response to an input modulation signal. In such an embodiment, the filter means may comprise a demodulator operable in response to a signal substantially identical to the input modulation signal.

According to a fourth aspect of the present invention there is provided an offset removal circuit for removing inherent offset from an output signal of a Hall element of the type having a pair of biasing contacts (designated supply negative SN and supply positive SP) and a pair of output contacts (designated output negative ON and output positive OP), the circuit comprising: commutation means operable to apply a commutation cycle to the contacts; means for applying a bias current to the currently operable bias contacts; means for receiving an obtained output signal from the currently operable output contacts; and filter means for applying a filter to the obtained output signal such that such that the element due to the inherent offset signal is substantially removed but the element due to the true Hall output signal is substantially retained.

The offset removal circuit of the fourth aspect of the present invention may incorporate any or all features of the third aspect of the present invention, as desired or as appropriate.

The method of the third aspect of the present invention can be applied to the Hall element signals analysed in the method of the first aspect of the present invention. Similarly, an offset removal circuit according to the fourth aspect of the present invention may be incorporated into a magnetic field orientation sensor of the second aspect of the present invention.

According to a fifth aspect of the present invention there is provided a method of determining the orientation of a magnetic field using a sensor of the type comprising one or more pairs of Hall elements operable to measure substantially orthogonal field components, the method comprising the steps of: applying a sinusoidally varying bias current to each Hall element; determining the sum of and/or the difference between the outputs of pairs of orthogonal Hall elements to provide a sum output signal and/or a difference output signal for each orthogonal pair of Hall elements; and determining one of: the phase difference the sum and difference output signals; the phase difference between the sum output signal and the applied bias current; or the phase difference between the difference output signal and the applied bias current for each orthogonal pair of Hall elements to thereby determine the orientation of the field relative to said pair of orthogonal Hall elements.

According to a sixth aspect of the present invention there is provided a magnetic field orientation sensor comprising: one or more pairs of substantially orthogonal Hall elements; bias current generating means operable to apply a sinusoidal bias current to each Hall element; one or both of summing means for calculating a sum output signal for each pair of orthogonal Hall elements the sum output signal being the sum of the outputs of the pair of Hall elements and difference means for calculating a difference output signal for each pair of orthogonal Hall elements the difference output signal being the difference between the outputs of the pair of Hall elements; and phase comparator means for determining one of: the phase difference between the sum and difference output signals; the phase difference between the sum output signal and the applied bias current; or the phase difference between the difference output signal and the applied bias current for each pair of orthogonal Hall elements to thereby determine the orientation of the magnetic field relative to said pair of orthogonal Hall elements.

So that the invention may be more clearly understood one embodiment will now be described further below, with reference to the accompanying drawings, in which:

Figure 1     shows a schematic block diagram of a position sensor operable according to the present invention;

Figure 2     shows a schematic block diagram of an alternative embodiment of a position sensor operable according to the present invention;

Figure 3     shows a schematic diagram of a position sensor according to the present invention implemented as a magnetic orientation sensor;

Figure 4a     shows a schematic diagram of a position sensor according to the present invention implemented as a magnetic linear position sensor;

Figure 4b     shows a schematic diagram of a position sensor according to the present invention implemented as an alternative embodiment of a magnetic linear position sensor;

Figure 4c     shows a schematic diagram of a position sensor according to the present invention implemented as a magnetic rotational position sensor;

Figure 4d     shows a schematic diagram of a position sensor according to the present invention implemented as an alternative embodiment of a magnetic rotational position sensor;

Figure 4e     shows a schematic diagram of a position sensor according to the present invention implemented as a further alternative embodiment of a magnetic rotational position sensor;

Figure 5a     shows schematically the variation in phase difference over a rotation period, a pole period or a tooth period as calculated using the circuitry of figure 1;

Figure 5b    shows schematically the variation in phase difference over a rotation period, a pole period or a tooth period as calculated using the circuitry of figure 2;

Figure 6     shows a schematic diagram of a position sensor according to the present invention implemented as an optical orientation sensor;

Figure 7     illustrates the commutation of supply and output contacts of a Hall element during the method of one embodiment of the invention;

Figure 8     shows a schematic block diagram of circuitry for implementing commutation of the type illustrated in figure 7;

Figure 9     illustrates the commutation of supply and output contacts of a Hall element during the method of an alternative embodiment of the invention; and

Figure 10    shows a schematic block diagram of circuitry for implementing commutation of the type illustrated in figure 9.

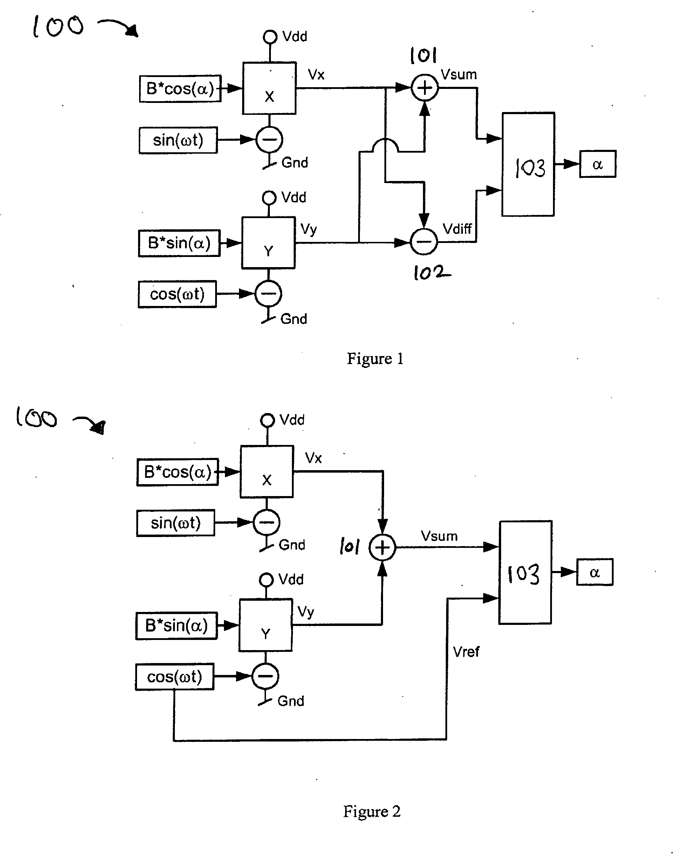

Turning now to figures 1-3, a magnetic orientation sensor 100 comprises a probe 121 containing a pair of orthogonally orientated Hall elements X and Y, operable to measure the local magnetic field component along the orthogonal axes x, y generated to a scale in the form of a magnetic rotor 115 rotatable about the z axis. By measurement of the local fields using X and Y an estimation of the orientation $\alpha$ of the magnetic axis of the rotor 115 relative to probe 121 can be obtained. The Hall elements may be implemented, for example, as horizontal Hall elements with an IMC (Integrated Magneto-Concentrator) layer (as disclosed in US2002/0021124 in 90316, 2SA10) or may be implemented as vertical Hall elements in CMOS architecture. Alternatively, the skilled man will appreciate that other forms of magnetic field sensor could be used, if desired.

In use, a periodic bias current Ix, Iy is applied to each of the Hall elements X, Y, Ix and Iy being 90° out of phase. For simplicity of explanation in the described embodiments the periodic bias is considered to have a sinusoidal form. Other periodic forms may however be used including rectangular waveforms. In such cases some additional filtering may be required.

The resultant outputs Vx, Vy of Hall elements X and Y are fed to summing means 101 and Difference means 102. The summing means 101 is operable to output a summed signal Vsum equal to the instantaneous sum of Vx and Vy. The difference means 102 is operable to output a difference signal Vdiff equal to the instantaneous difference between Vx and Vy. The outputs Vsum and Vdiff are fed into a phase comparator 103, which is operable to determine the phase difference between them. The phase angle between Vsum and Vdiff provides an indication of the orientation of the magnetic field component lying parallel to the x-y plane, as is explained in greater detail below.

The magnetic field vector component parallel to the x-y plane may be described in terms of its magnitude B and its orientation angle relative to the x-axis, $\alpha$. This being the case, the output voltage Vx of Hall element X is proportional to Bx=B*cos($\alpha$). Additionally, the output voltage Vy of Hall element Y is proportional to By=B*sin($\alpha$). Furthermore, both Vx and Vy are proportional to the biasing current Ix, Iy applied to Hall elements X and Y respectively. In particular this proportionality is described by the magnetic sensitivity S. Typically, if the two Hall elements X, Y are like Hall elements, then assuming that they have equal magnetic sensitivity (Sx=Sy=S) is fair. Accordingly, Vx and Vy are given by:

$$Vx=S*B*\cos(\alpha)*Ix$$

$$Vy=S*B*\sin(\alpha)*Iy$$

In a conventional sensor, wherein field orientation is determined by considering the magnitudes of Vx and Vy the bias currents Ix and Iy are held equal and constant and thus are not directly relevant to the calculation of the field orientation. However, in the present invention, the bias currents Ix and Iy are varied sinusoidally over time (t) with a 90° phase difference therebetween, such that:

$$Ix = I*sin(\omega t)$$

$$Iy = I*cos(\omega t)$$

As such, the Hall element X, Y outputs will be given by the following identities:

$$Vx = S*B*cos(\alpha)*I*sin(\omega t)$$

$$Vy = S*B*sin(\alpha)*I*cos(\omega t)$$

At the next stage of processing, the sum and difference output signals Vsum and Vdiff are generated by summing means 101 and difference means 102. These signals are given by the identities below:

$$Vsum = Vx+Vy = S*B*I*(cos(\alpha)*sin(\omega t) + sin(\alpha)*cos(\omega t))$$

$$Vdiff = Vx-Vy = S*B*I*(cos(\alpha)*sin(\omega t) - sin(\alpha)*cos(\omega t))$$

Using the trigonometric identity

$$sin(A\pm B) = sin(A)*cos(B) \pm cos(A)*sin(B)$$

the above identities can be re-expressed as

$$Vsum = Vx+Vy = S*B*I*sin(\omega t + \alpha)$$

$$Vdiff = Vx-Vy = S*B*I*sin(\omega t - \alpha)$$

It is therefore clear that, where the field maintains a steady orientation, that both Vsum and Vdiff are sinusoidal signals with period ω that have a relative phase angle of 2α, Vsum being shifted forward by α and Vdiff being shifted back by α. Accordingly, the field orientation angle α can be determined by first using phase comparator 103 to determine the phase difference between Vsum and Vdiff; and then having the determined phase difference.
Monitoring the orientation angle of rotor 115 in this manner can help to eliminate systematic bias that may occur if the magnitude of the bias current applied to one Hall element consistently exceeds that applied to the other or if the sensitivity of the Hall elements is not equal.

An alternative embodiment is shown in figure 2. In this embodiment only the sum signal Vsum is calculated. The phase comparator 103 is then operable to compare Vsum with Vref, a signal corresponding to the bias current applied to Hall element Y. The relative phase Pref between Vsum and Vref can then be used to calculate the field orientation angle $\alpha$, as is set out below:

$$Vsum = Vx+Vy = S*B*I*sin(\omega t + \alpha)$$

$$Vref = cos(\omega t) = sin(\omega t + 90^o)$$

If the relative phase angle determined by phase comparator 103 is Pref, then solving for $\alpha$ leaves

$$\alpha = Pref + 90^o$$

In this embodiment, it is thus possible to calculate the field orientation angle $\alpha$ directly from Vsum without also calculating Vdiff. The skilled man will of course appreciate that Vref could be taken from the bias current input to Hall element X (in which case Vref = sin($\omega t$) and $\alpha$ = Pref). Additionally or alternatively, Vdiff could be used in place of Vsum with either bias current signal used as Vref. In such circumstances $\alpha$ = -Pref - 90 for Vref = cos($\omega t$) and $\alpha$ = -Pref for Vref = sin($\omega t$).

The use of the method of figure 1 (taking the phase difference between Vsum and Vdiff) generates a better resolution as the output phase difference shifts by twice the variation in orientation angle. The use of the method of figure 2 (taking the phase difference between either Vsum or Vdiff and Vref) can however generate a true orientation as there is no ambiguity as to the orientation angle. In practice both methods may be used in parallel, the method of figure 2 for initial determination and the method of figure 1 for finer determination.

It is clear to the skilled man that the above techniques may be applied to sensors having Hall elements operable to measure magnetic field components along three mutually orthogonal axes x, y, z. In such circumstances, it is necessary to generate a Vsum and Vdiff for at least two of the planes x-y, y-z and z-x in order to determine the overall orientation of the field. It is also possible to apply the method to sensors wherein two or more Hall elements are provided to measure magnetic field components in each direction.

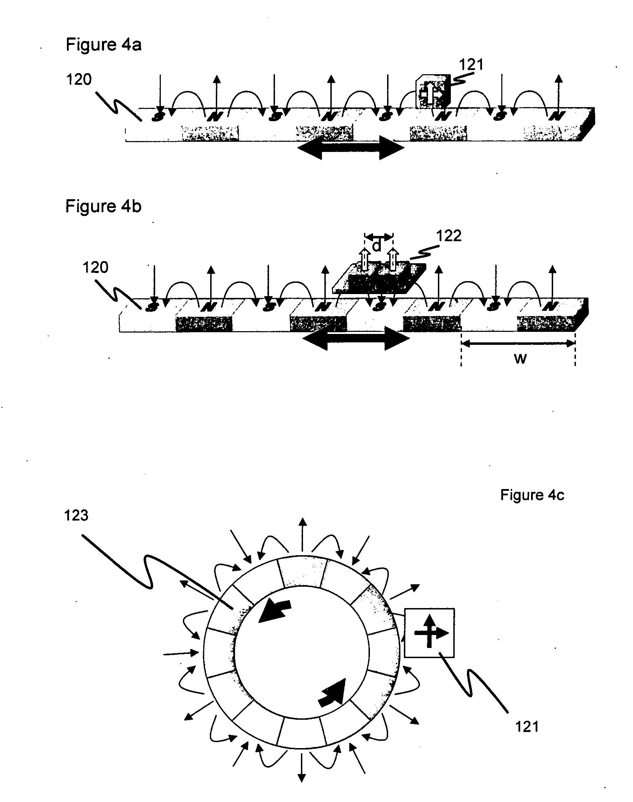

The method of the present invention may also be applied in a linear position sensor 100 of the form shown in figure 4a. In such a sensor 100, a pair of orthogonally orientated Hall elements X, Y (or other types of magnetic field sensing elements, if so desired) are provided on a probe 121 adjacent to a linear magnetic scale 120. The linear scale 120 comprises regular alternating bands with opposite magnetic polarities, a pair of such bands comprising a full pole period w. The Hall elements X, Y are orientated parallel to and perpendicular to direction of motion.

Close to the scale 120 the field perpendicular to the scale is more or less rectangular N-S-N-S, however, with distance the higher harmonics within rectangular shape signals decay faster than the fundamental wave, and the field shape approaches a sinusoidal signal. When the probe 121 is aligned with a pole, Vy is a maximum or minimum value (depending upon whether it is a north (N) or south (S) pole) and Vx is substantially zero. When the probe 121 is between a N and S pole, the Vy is substantially zero and Vx is a minimum or maximum value (depending on the orientation N-to-S or S-to-N). Consequently, assuming a suitable separation between the probe 121 and the scale 120, the outputs Vx, Vy of the Hall elements X, Y with respect to position comprise a pair of approximately sinusoidal signals with a mutual phase difference of 90°.

In order to determine the linear position of the probe 121 relative to the scale 120, as in the embodiments of figures 1 and 2, the Hall elements X, Y are biased with bias currents of the form Ix=I*sin($\omega t$) and Iy=I*cos($\omega t$). By calculating the sum and/or difference signals Vsum or Vdiff and then taking the phase difference between Vsum and Vdiff or between Vsum or Vdiff and Vref, the position of the probe 121 within a pole period w can be calculated. By maintaining a count of successive maxima of either sensing element X, Y, an absolute linear position of the probe 121 relative to the scale 120 can be determined.

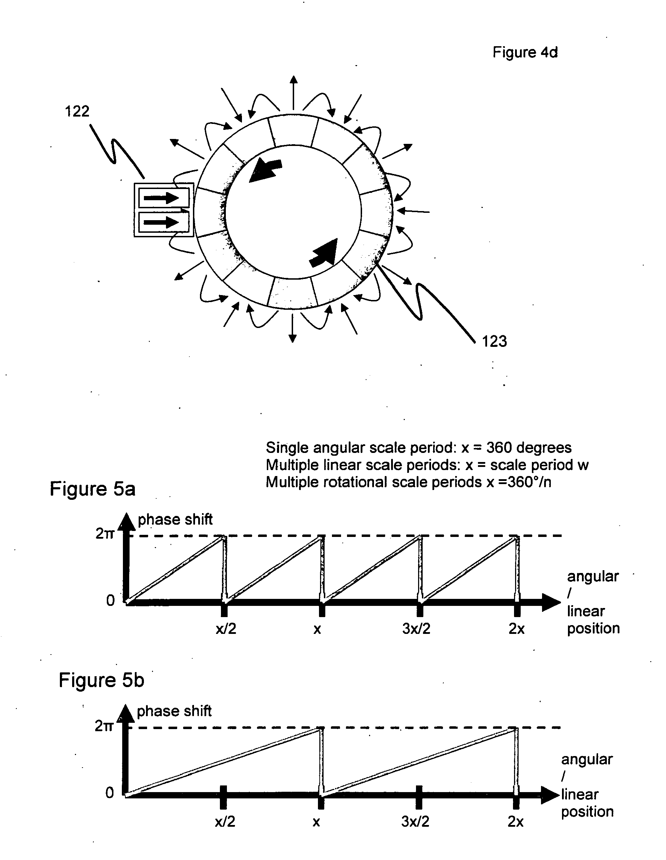

As is illustrated in figure 5a, if the difference of Vsum and Vdiff (according to the method of figure 1) is calculated, two full phase shifts occur over a full pole period. Accordingly, a more accurate position within the pole period may be potentially be determined assuming additional verification can be made as to whether the probe 121 is in the first or second part of said pole period. As is illustrated in figure 5b, by taking the phase difference between Vsum and Vdiff or between Vsum or Vdiff and Vref (according to the method of figure 2), the position of the probe 121 within a pole period w can be calculated without ambiguity. In some embodiments both techniques may be used in parallel. In this manner the technique of figure 2 can determine coarsely where the probe 121 is located and the technique of figure 1 can be used to provide a finer determination of probe 121 location. In such an embodiment either the probe 121 may be fixed and the scale 120 movable or vice versa.

The method of the present invention may also be applied in a linear position sensor 100 of the form shown in figure 4b. In such a sensor 100, a pair of Hall elements X, Y (or other types of magnetic field sensing elements, if so desired) orientated in the same direction but with a mutual separation d are provided on a probe 122 adjacent to a linear magnetic scale 120. The linear scale 120 comprises regular alternating bands with opposite magnetic polarities, a pair of such bands comprising a full pole period w.

Close to the scale 120 the field perpendicular to the scale is more or less rectangular N-S-N-S, however, with distance the higher harmonics within rectangular shape signals decay faster than the fundamental wave, and the field shape approaches a sinusoidal signal. The Hall elements X, Y are orientated parallel to each other and at mutual separation d equal to w/4. Consequently, assuming a suitable separation between the probe 122 and the scale 120, the outputs Vx, Vy of the Hall elements X, Y with respect to probe 122 position comprise a pair of substantially sinusoidal signals with a mutual phase difference of 90°.

In order to determine the linear position of the probe 122 relative to the scale 120, as in the embodiments of figures 1 and 2, the Hall elements X, Y are biased with bias currents of the form Ix=I*sin(ωt) and Iy=I*cos(ωt). By calculating the sum and/or difference signals Vsum or Vdiff and then taking the phase difference between Vsum and Vdiff or between Vsum or Vdiff and Vref, the position of the probe 122 within a pole period w can be calculated. By maintaining a count of successive maxima of either sensing element X, Y, an absolute linear position of the probe 122 relative to the scale 120 can be determined.

As is illustrated in figure 5a, if the difference of Vsum and Vdiff (according to the method of figure 1) is calculated, two full phase shifts occur over a full pole period. Accordingly, a more accurate position within the pole period may be potentially be determined assuming additional verification can be made as to whether the probe 122 is in the first or second part of said pole period. As is illustrated in figure 5b, by taking the phase difference between Vsum and Vdiff or between Vsum or Vdiff and Vref (according to the method of figure 2), the position of the probe 122 within a pole period w can be calculated without ambiguity. In some embodiments both techniques may be used in parallel. In this manner the technique of figure 2 can determine coarsely where the probe 122 is located and the technique of figure 1 can be used to provide a finer determination of probe 122 location. In such an embodiment either the probe 122 may be fixed and the scale 120 movable or vice versa.

The method of the present invention may also be applied in a rotary position sensor 100 of the form shown in figure 4c. In such a sensor 100, a pair of orthogonally orientated Hall elements X, Y (or other types of magnetic field sensing elements, if so desired) are provided on a probe 121 adjacent to an annular magnetic scale 123. The annular scale 123 comprises regular alternating bands with opposite magnetic polarities, a pair of such bands comprising a full pole period w. The Hall elements X, Y are orientated parallel to and perpendicular to direction of motion.

Close to the scale 123 the field perpendicular to the scale is more or less rectangular N-S-N-S, however, with distance the higher harmonics within rectangular shape signals decay faster than the fundamental wave, and the field shape approaches a sinusoidal signal. When the probe 121 is aligned with a pole, Vy is a maximum or minimum value (depending upon whether it is a north (N) or south (S) pole) and Vx is substantially zero. When the probe 121 is between a N and S pole, the Vy is substantially zero and Vx is a minimum or maximum value (depending on the orientation N-to-S or S-to-N). Consequently, assuming a suitable separation between the probe 121 and the scale 123, the outputs Vx, Vy of the Hall elements X, Y with respect to position comprise a pair of approximately sinusoidal signals with a mutual phase difference of 90°.

In order to determine the angular position of the probe 121 relative to the scale 123, as in the embodiments of figures 1 and 2, the Hall elements X, Y are biased with bias currents of the form Ix=I*sin(ωt) and Iy=I*cos(ωt). By calculating the sum and/or difference signals Vsum or Vdiff and then taking the phase difference between Vsum and Vdiff or between Vsum or Vdiff and Vref, the position of the probe 121 within a pole period w can be calculated. By maintaining a count of successive maxima of either sensing element X, Y, an absolute angular position of the probe 121 relative to the scale 123 can be determined.

As is illustrated in figure 5a, if the difference of Vsum and Vdiff (according to the method of figure 1) is calculated, two full phase shifts occur over a full pole period. Accordingly, a more accurate position within the pole period may be potentially be determined assuming additional verification can be made as to whether the probe 121 is in the first or second part of said pole period. As is illustrated in figure 5b, by taking the phase difference between Vsum and Vdiff or between Vsum or Vdiff and Vref (according to the method of figure 2), the position of the probe 121 within a pole period w can be calculated without ambiguity. In some embodiments both techniques may be used in parallel. In this manner the technique of figure 2 can determine coarsely where the probe 121 is located and the technique of figure 1 can be used to provide a finer determination of probe 121 location.

The method of the present invention may also be applied in a rotary position sensor 100 of the form shown in figure 4d. In such a sensor 100, a pair of Hall elements X, Y (or other types of magnetic field sensing elements, if so desired) orientated in the same direction but with a mutual separation d are provided on a probe 122 adjacent to an annular magnetic scale 123. The annular scale 123 comprises regular alternating bands with opposite magnetic polarities, a pair of such bands comprising a full pole period w.

Close to the scale 123 the field perpendicular to the scale is more or less rectangular N-S-N-S, however, with distance the higher harmonics within rectangular shape signals decay faster than the fundamental wave, and the field shape approaches a sinusoidal signal. The Hall elements X, Y are orientated parallel to each other and at separation d equal to w/4. Consequently, assuming a suitable separation between probe 122 and scale 123, the outputs Vx, Vy of the Hall elements X, Y with respect to probe 122 position comprise a pair of substantially sinusoidal signals with a mutual phase difference of 90°.

In order to determine the angular position of the probe 122 relative to the scale 123, as in the embodiments of figures 1 and 2, the Hall elements X, Y are biased with bias currents of the form $Ix=I*sin(\omega t)$ and $Iy=I*cos(\omega t)$. By calculating the sum and/or difference signals Vsum or Vdiff and then taking the phase difference between Vsum and Vdiff or between Vsum or Vdiff and Vref, the position of the probe 122 within a pole period w can be calculated. By maintaining a count of successive maxima of either sensing element X, Y, an absolute angular position of the probe 122 relative to the scale 123 can be determined.

As is illustrated in figure 5a, if the difference of Vsum and Vdiff (according to the method of figure 1) is calculated, two full phase shifts occur over a full pole period. Accordingly, a more accurate position within the pole period may be potentially be determined assuming additional verification can be made as to whether the probe 122 is in the first or second part of said pole period. As is illustrated in figure 5b, by taking the phase difference between Vsum and Vdiff or between Vsum or Vdiff and Vref (according to the method of figure 2), the position of the probe 122 within a pole period w can be calculated without ambiguity. In some embodiments both techniques may be used in parallel. In this manner the technique of figure 2 can determine coarsely where the probe 122 is located and the technique of figure I can be used to provide a finer determination of probe 122 location. In such an embodiment either the probe 122 may be fixed and the scale 123 movable or vice versa.

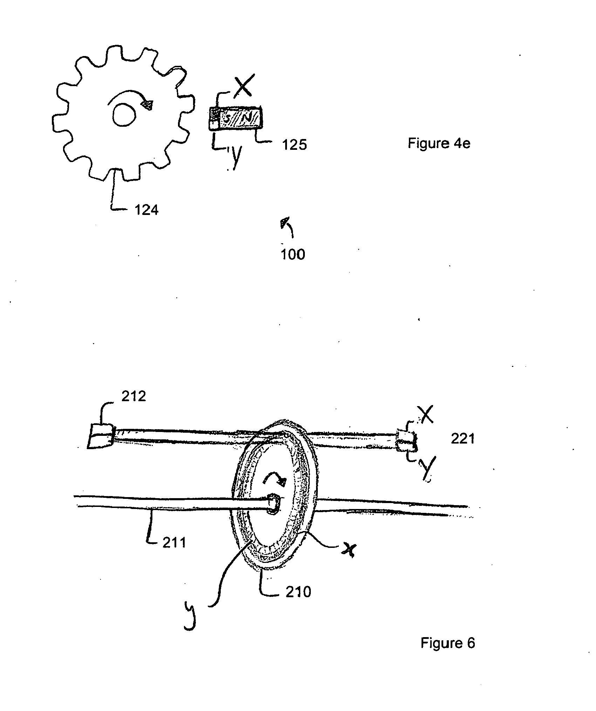

The method of the present invention may also be applied in a rotary position sensor 100 of the form shown in figure 4e. In such a sensor 100, a pair of Hall elements X, Y (or other types of magnetic field sensing elements, if so desired) orientated in the same direction but with a mutual separation d are provided on a probe 122 provided with back biasing magnet 125 adjacent to a scale 124. The scale 124 comprises a toothed wheel of paramagnetic or ferromagnetic material, with a tooth width and tooth separation equal to T.

Close to the scale 123 the field perpendicular to the scale is more or less rectangular N-S-N-S, however, with distance the higher harmonics within rectangular shape signals decay faster than the fundamental wave, and the field shape approaches a sinusoidal signal. The Hall elements X, Y are orientated parallel to each other and at separation d equal to T/2. Consequently, assuming a suitable separation between probe 122 and scale 124, the outputs Vx, Vy of the Hall elements X, Y with respect to probe 122 position comprise a pair of substantially sinusoidal signals with a mutual phase difference of 90°.

In order to determine the angular position of the probe 122 relative to the scale 124, as in the embodiments of figures 1 and 2, the Hall elements X, Y are biased with bias currents of the form $Ix=I*sin(\omega t)$ and $Iy=I*cos(\omega t)$. By calculating the sum and/or difference signals Vsum or Vdiff and then taking the phase difference between Vsum and Vdiff or between Vsum or Vdiff and Vref, the position of the probe 122 within relative to a given tooth can be calculated. By maintaining a count of successive maxima of either sensing element X, Y, an absolute angular position of the probe 122 relative to the scale 124 can be determined.

As is illustrated in figure 5a, if the difference of Vsum and Vdiff (according to the method of figure 1) is calculated, two full phase shifts occur over a full tooth-gap period. Accordingly, a more accurate position relative to a tooth may be potentially be determined assuming additional verification can be made as to whether the probe 122 is leading or lagging a tooth. As is illustrated in figure 5b, by taking the phase difference between Vsum and Vdiff or between Vsum or Vdiff and Vref (according to the method of figure 2), the position of the probe 122 relative to a tooth can be calculated without ambiguity. In some embodiments both techniques may be used in parallel. In this manner the technique of figure 2 can determine coarsely where the probe 122 is located and the technique of figure 1 can be used to provide a finer determination of probe 122 location. In such an embodiment either the probe 122 may be fixed and the scale 124 movable or vice versa. In a further variation, a linear sensor may be constructed comprising a linear regular toothed scale, a probe 122 and a back biasing magnet 125.

The method of the present invention may also be applied in a sensor 200 of the form shown in figure 6. In such a sensor 200, an encoder disc 210 co rotates with a shaft 211. The encoder disc 210 is illuminated by a light source 212 operable to separate beams of light at two encoder tracks x, y on the encoder disc. The tracks x, y have light transmission characteristics that vary as a function of angle $\alpha$ around the disc. Light transmitted through each track is detected by a probe 221 comprising a pair of dedicated light sensing element X, Y respectively. In alternative arrangements, the reflective characteristics of each track might vary with angle $\alpha$ and in such cases, the light source 212 would be provided on the same side of disc 210 as sensing elements X, Y.

The track x has transmission characteristics such that the intensity of light Ax transmitted through track x as a function of angle $\alpha$ is Ax=A*cos($\alpha$), wherein A is the intensity of light incident upon the track x from light source 212. Additionally, the track y has transmission characteristics such that the intensity of light Ay transmitted through track y as a function of angle $\alpha$ is Ay=A*sin($\alpha$), wherein A is the intensity of light incident upon the track y from light source 212. The output voltages Vx, Vy of sensing elements X, Y are thus proportional to cos($\alpha$) and sin($\alpha$) respectively. If the sensing elements X, Y are biased using a sinusoidal signal, the method of the present invention can be used to determine the orientation angle $\alpha$ of the disc 210.

In a sensor 200, biasing can be achieved by directly biasing the output signal with a biasing signal of the form sin($\omega$t) for sensing element X and cos($\omega$t) for sensing element Y or by varying the intensity light of emitted by the light source 302 to be incident on each track according to a bias signal of the form sin($\omega$) for track x and cos($\omega$t) for track y. As in the embodiments of figures 1-3, by calculating the sum and/or difference signals Vsum or Vdiff and then taking the phase difference between Vsum and Vdiff or between Vsum or Vdiff and Vref, the absolute position of the encoder disc 210 can be calculated.

In a sensor 200, biasing can be achieved by directly biasing the output signal with a biasing signal of the form sin($\omega$t) for sensing element X and cos($\omega$t) for sensing element Y or by varying the intensity light of emitted by the light source 302 to be incident on each track according to a bias signal of the form sin($\omega$t) for track x and cos($\omega$t) for track y. As in the embodiments of figures 1-3, by calculating the sum and/or difference signals Vsum or Vdiff and then taking the phase difference between Vsum and Vdiff or between Vsum or Vdiff and Vref, the absolute position of the encoder disc 210 can be calculated.

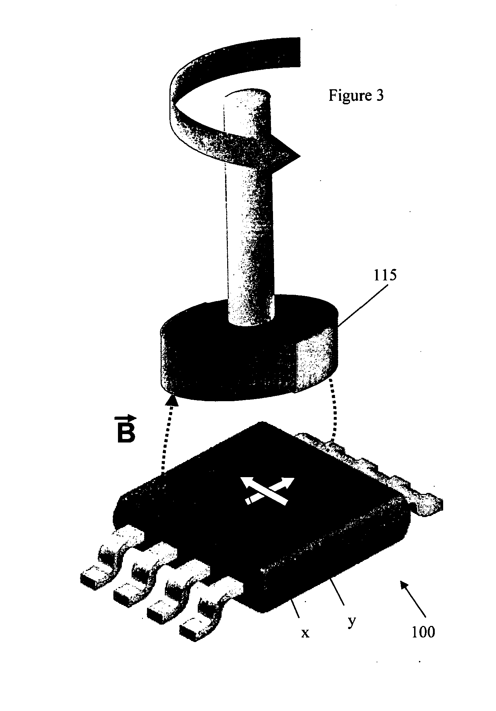

As in the embodiment of figure 3, the use of the method of figure 1 (taking the phase difference between Vsum and Vdiff) generates a better resolution as the output phase difference shifts by twice the variation in orientation angle. The use of the method of figure 2 (taking the phase difference between either Vsum or Vdiff and Vref) can however generate a true orientation as there is no ambiguity as to the orientation angle. In practice both methods may be used in parallel, the method of figure 2 for initial determination and the method of figure 1 for finer determination.

In alternative variants of the sensor 200, the probe 221 may rotate whilst the disc 210 remains fixed. The encoder tracks x and y may have more than one period of sinusoidal variation in transmission or reflectance properties along their length. In such cases, by analogy with the embodiments of figure 4, a position relative to the variation period may be determined using the methods of figure 1 and figure 2 and an absolute position may be determined by maintaining a count of successive maxima. In a further variant, the tracks x, y may be linear tracks and the sensor 200 may be used as a linear position sensor.

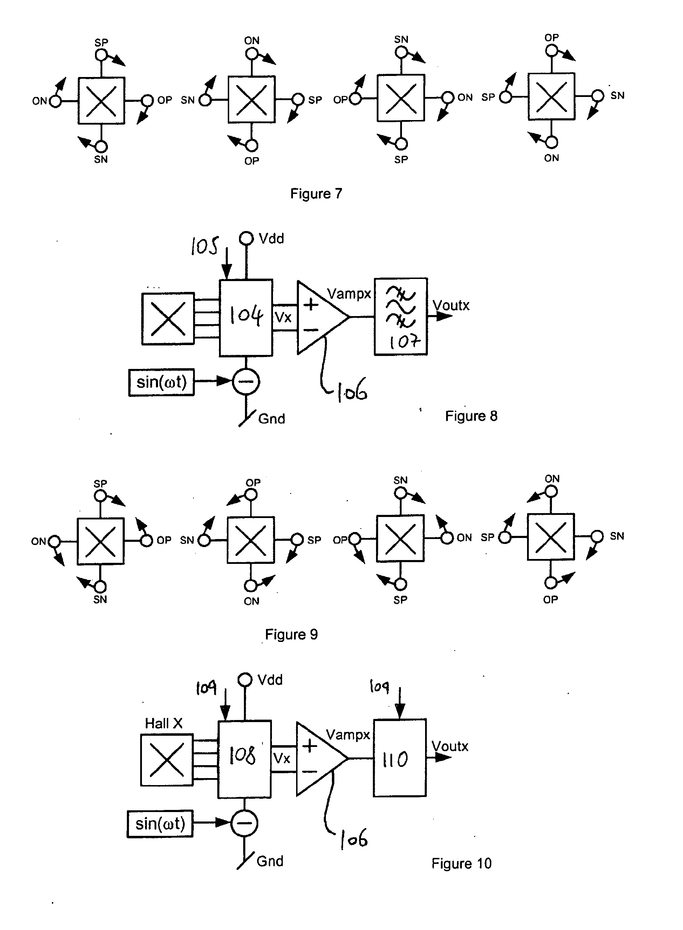

Turning now to figures 7 and 8, in orientation sensor embodiments having differently oriented Hall elements, commutation of the supply and output contacts of the Hall elements X, Y can be used to help reduce systematic offsets in the Hall element itself and in the amplification of the output signal before further processing. In the present example, the commutation is implemented in a sensor 100 of the type described in figures 1 and 2 but it may also be applied to Hall elements in other types of magnetic sensor. In the following explanation, the Hall element X is sensing a field component perpendicular to the plane of the page and SP denotes supply-positive, SN is supply-negative, OP is output-positive (non-inverting amplifier input) and ON is output negative (inverting amplifier input). As can be seen in the figure, the supply and output contacts are both commutated around the Hall element X in a clockwise direction in a four step cycle. It is of course clear that this direction may be reversed, if required or desired.

The circuitry for carrying out this commutation is shown in figure 8. In this embodiment the commutation is operated by a switching means 104 in response to a regular chop signal 105. The switching means 104 receives the input bias current, in this case sin($\omega$t) and is operable to apply this to the Hall element X. The switching means is also operable to receive the output signal Vx (= S*B*cos($\alpha$)*sin($\omega$t)) from the Hall element X and input it to an amplifier 106. The switching means 104, in response to the chop signal 105 connects the contacts in turn to the bias current and to the signal output, as is shown in figure 7. As a result of commuting the bias and output contacts, the sign of the inherent offset voltage in the Hall element X will vary from phase to phase.

The amplifier 106 has an inherent DC offset, which can be considered as being added to the idealised output of amplifier 106 when providing the amplified output signal Vampx. In order to eliminate the Hall element X offset and the amplifier 106 offset, a band pass filter 107 is provided. The band pass filter 107 is operable to average the alternating Hall offset voltage. In order to achieve this, the upper cutoff frequency must be less than the frequency of chopping signal 105. Additionally, the band pass filter 107 is operable to eliminate the DC amplifier offset. In order to achieve this, the lower cutoff frequency must be less than the Hall bias modulation frequency $\omega$.

If the band pass filter is applied correctly, the signal Voutx will an amplified signal from Hall element X, which does not contain any inherent offset due to either the Hall element X or the amplifier 106. The signal Voutx can then be used in the methods described in relation to figures 1 and 2 to determine the field orientation angle $\alpha$ or may be used by any other apparatus requiring an input from a unidirectional Hall element.

An alternative implementation of commutation to remove inherent offsets from a Hall element X output signal is illustrated by figures 9 and 10. In the following explanation as was the case above, the Hall element X is sensing a field component perpendicular to the plane of the page and SP denotes supply-positive, SN is supply-negative, OP is output-positive (non-inverting amplifier input) and ON is output negative (inverting amplifier input). As can be seen in the figure, the supply and output contacts are commutated around the Hall element X in opposite directions in a four step cycle. In this case, the biasing contacts are commutated in a clockwise direction and the output contacts are commutated in an anticlockwise direction. It is of course clear that these directions may be reversed, if required or desired.

The circuitry for carrying out this commutation is shown in figure 10. In this embodiment the commutation is operated by a modulator 108 in response to a regular modulation input signal 109. The modulator 108, in addition to the modulation input signal 109 receives the input bias current, in this case $\sin(\omega t)$ and is operable to apply this to the Hall element X. The modulator 108 is also operable to receive the output signal Vx (= $S*B*\cos(\alpha)*\sin(\omega t)$) from the Hall element X and input it to an amplifier 106. The modulator 108, in response to the modulation input signal 109 connects the contacts in turn to the bias current and to the signal output, as is shown in figure 9. As a result of commuting the bias and output contacts, the sign of the inherent offset voltage in the Hall element X will have a constant sign whereas in contrast the sign of the Hall voltage will vary from phase to phase.

As in the previous embodiment, the amplifier 106 has an inherent DC offset, which can be considered as being added to the idealised output of amplifier 106 when providing the amplified output signal Vampx. In this case, both the Hall element offset and the amplifier offset are DC signals and accordingly, a demodulator 110 is provided. The demodulator 110 receives modulation input signal 109 as a reference signal for the demodulation operation.

If the demodulation of Vampx is applied successfully Vampx (sample1 - sample2 + sample3- sample4 etc) an output signal Voutx is obtained comprising the amplified Hall voltage without the inherent offset voltage from Hall element X or amplifier 106. The signal Voutx can then be used in the methods described in relation to figures 1 and 2 to determine the field orientation angle $\alpha$ or may be used by any other apparatus requiring an input from a unidirectional Hall element.

It is of course clear such commutation schemes outlined in relation to figures 5 to 8 could be implemented for each Hall element in a system comprising multiple Hall elements.

It is of course to be understood that the invention is not to be restricted to the details of the above embodiment which is described by way of example only.

## Claims

1. A method of determining the position of a probe relative to a scale wherein the probe contains a sensor of the type comprising one or more pairs of orthogonal sensing elements operable to measure properties varying locally with the position of the probe relative to the scale, the method comprising the steps of: applying a periodically varying bias to each sensing element; determining the sum of and/or the difference between the outputs of pairs of sensing elements to provide a sum output signal and/or a difference output signal for each pair of sensing elements; and determining one of: the phase difference between the sum and difference output signals; the phase difference between the sum output signal and the applied bias; or the phase difference between the difference output signal and the applied bias for each pair of sensing elements to thereby determine the position of the probe relative to the scale.

2. A method as claimed in claim 1 wherein the scale provides a single scale period of property variation and the method involves directly determining the absolute position of the probe relative to the scale.

3. A method as claimed in claim 1 wherein the scale provides multiple repeating scale periods of property variations and the method involves determining the position of the probe relative to a particular scale period and wherein the absolute position of the probe is determined by maintaining a count of successive scale periods.

4. A method as claimed in any preceding claim wherein the periodically varying bias is a sinusoidal bias applied to the sensing elements in the or each pair 90° out of phase.

5. A method as claimed in any preceding claim wherein the phase difference angle between the sum or difference signal and either applied bias signal is used to determine the probe position and the phase difference angle between the sum output and the difference output is used to improve the resolution of the determined probe position.

6. A method as claimed in any preceding claim wherein the phase difference is determined by the use of a phase comparator to output a pulse width modulated signal wherein the duty period varies in proportion to the determined phase difference between zero and full width over a full scale period.

7. A method as claimed in claim 6 wherein the pulse width modulated signal is converted to an analogue output by low pass filtering.

8. A method as claimed in claim 6 wherein the pulse width modulated signal is converted to a digital signal by starting a counter upon each rising pulse and stopping said counter on each falling pulse, the counter being clocked by a signal having the same timebase as the applied bias.

9. A method as claimed in any preceding claim wherein the property sensed by the sensing element is the local magnetic field and wherein the applied periodic bias is a sinusoidal bias current.

10. A method as claimed in any one of claims 1 to 8 wherein the property sensed by the sensing element is the local radiation intensity and wherein the applied periodic bias is a sinusoidal variation in the intensity of the light source or a sinusoidal bias applied to the output of the sensing elements.

11. A position sensor for sensing the position of a probe relative to a scale comprising: one or more pairs of sensing elements; bias generating means operable to apply a periodic bias to each sensing element; one or both of summing means for calculating a sum output signal for each pair of sensing elements the sum output signal being the sum of the outputs of the pair of sensing elements and difference means for calculating a difference output signal for each pair of sensing elements the difference output signal being the difference between the outputs of the pair of sensing elements; and phase comparator means for determining one of: the phase difference between the sum and difference output signals; the phase difference between the sum output signal and the applied bias; or the phase difference between the difference output signal and the applied bias for each pair of sensing elements to thereby determine the position of the probe relative to the scale

12. A position sensor as claimed in claim 11 wherein the sensing elements in the or each pair are orientated or positioned such that the pair of sensing elements obtain output signals that are substantially 90° out of phase.

13. A position sensor as claimed in claim 11 or claim 12 wherein either: the probe is fixed and the scale is moveable; or the scale is fixed and the probe is movable and wherein relative movement is rotational and the scale is or incorporates a rotor such as a shaft, a switch element, a disc, a rotary encoder.

14. A position sensor as claimed in claim 11 or claim 12 wherein either: the probe is fixed and the scale is moveable; or the scale is fixed and the probe is movable and wherein relative movement is linear and the scale is or incorporates a track or a rod.

15. A position sensor as claimed in any one of claims 11 to 14 wherein the monitored property is a magnetic field, and the sensing elements are magnetic field sensing elements such as Hall elements, anisotropic magneto resistors (AMR), giant magneto resistors (GMR) or tunnelling magneto resistors (GMR).

16. A position sensor as claimed in claim 15 wherein the scale may comprise alternating bands of magnetic material of opposite polarity defining a scale period and the probe comprises either a pair of orthogonally orientated magnetic sensing elements or a pair of magnetic sensing elements having a parallel orientation and a lateral separation equal to half the width of each band.

17. A position sensor as claimed in claim 1 wherein the scale comprises a plurality of regularly spaced projecting teeth defining a scale period and the probe comprises either a pair of magnetic sensing elements having a parallel orientation and a lateral separation equal to half the width of each tooth.

18. A position sensor as claimed in claim 15 wherein the scale comprises a magnetic rotor having a magnetic axis substantially perpendicular to its axis of rotation defining a single scale period and the probe comprises a pair of orthogonally orientated magnetic sensing elements.

19. A position sensor as claimed in any one of claims 11 to 14 wherein the scale comprises a pair of encoding tracks, each track having sinusoidally varying reflection or transmission properties and the probe comprises a pair of radiation sensing elements, each sensing element being operable to detect radiation reflected or transmitted from one of the tracks and wherein the sinusoidal variation is 90° out of phase between the tracks.

20. A position sensor as claimed in claim 19 wherein the tracks comprise a single period of sinusoidal variation along their length or comprise multiple periods of sinusoidal variation along their lengths.

21. A method of removing inherent offset from an output signal of a Hall element of the type having a pair of biasing contacts (designated supply negative SN and supply positive SP) and a pair of output contacts (designated output negative ON and output positive OP), the method comprising the steps of: commutating connection to the contacts such that each of the contacts is operable as each of the pair of bias contacts SN, SP and operable as each of the output contacts ON, OP in a regular cycle; and applying a suitable filter to the obtained output such that the element due to the inherent offset signal is substantially removed but the element due to the true Hall output signal is substantially retained.

22. A method as claimed in claim 21 wherein the designated bias contacts are driven by a sinusoidally varying bias current.

23. A method as claimed in claim 21 or claim 22 wherein the obtained output signal is amplified and wherein the applied filter is operable to remove offset introduced by amplification in addition to offset inherent to the Hall element.

24. A method as claimed in any one of claims 21 to 23 wherein the commutation is arranged such that each contact is operable as each of as each of the pair of bias contacts SN, SP and as each of the output contacts ON, OP in turn in a four step unidirectional rotating cycle around the Hall element each contact being operable in sequence as SN, OP, SP, ON in turn.

25. A method as claimed in any one of claims 21 to 23 wherein the bias contacts and the output contacts change function according to contra-rotational cycles and one opposing pair of contacts are each operable in sequence as SN, ON, SP, OP in turn and the other opposing pair of contacts are each operable in sequence as ON, SN, OP, SP.

26. A method as claimed in any one of claims 21 to 25 wherein the commutation cycle is controlled by a switching means in response to a chopping signal and wherein the filter comprises a band pass filter, the upper cutoff frequency being less than the frequency of the chopping signal and the lower cutoff frequency being greater than the frequency of the sinusoidal bias current..

27. A method as claimed in any one of claims 21 to 25 wherein the commutation cycle is controlled by a modulator in response to an input modulation signal and wherein the filter means comprises a demodulator operable in response to a signal substantially identical to the input modulation signal.

28. An offset removal circuit for removing inherent offset from an output signal of a Hall element of the type having a pair of biasing contacts (designated supply negative SN and supply positive SP) and a pair of output contacts (designated output negative ON and output positive OP), the circuit comprising: commutation means operable to apply a commutation cycle to the contacts; means for applying a bias current to the currently operable bias contacts; means for receiving an obtained output signal from the currently operable output contacts; and filter means for applying a filter to the obtained output signal such that such that the element due to the inherent offset signal is substantially removed but the element due to the true Hall output signal is substantially retained.

100

Vdd

B*cos(α) → X — Vx

sin(ωt) → ⊖ Gnd

101 ⊕ Vsum

102 ⊖ Vdiff

103 → α

Vdd

B*sin(α) → Y — Vy

cos(ωt) → ⊖ Gnd

Figure 1

100

Vdd

B*cos(α) → X — Vx

sin(ωt) → ⊖ Gnd

101 ⊕ Vsum

103 → α

Vdd

B*sin(α) → Y — Vy

cos(ωt) → ⊖ Gnd

Vref

Figure 2

Figure 3

Figure 4a

Figure 4b

Figure 4c

Figure 4d

122

123

Single angular scale period: x = 360 degrees
Multiple linear scale periods: x = scale period w
Multiple rotational scale periods x =360°/n

Figure 5a

phase shift

2π

0

x/2          x          3x/2          2x

angular
/
linear
position

Figure 5b

phase shift

2π

0

x/2          x          3x/2          2x

angular
/
linear
position

Figure 4e

— 125

— 124

100

212

221

X

Y

211

210

y

Figure 6

Figure 7

Figure 8

Figure 9

Figure 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020021124 A

- US 903162SA10 A